# DEMANDE DE BREVET EUROPEEN

(11) **EP 0 987 143 A1**
(43) Date de publication de la demande: **22.03.2000**
(21) Numéro de dépôt: 99402250.7
(22) Date de dépôt: 14.09.1999
(51) Int. Cl.: B60Q 1/42

(54) **Commutateur électrique pour l'alimentation des indicateurs de changement de direction d'un véhicle automobile**

(30) Priorité: 16.09.1998 FR 9811547
(71) Demandeur: SC2N, 78180 Montigny-le-Bretonneux (FR)
(72) Inventeur: Fevrier, Bruno, 14730 Giberville (FR); Lagniel, Benoît Alain Jean-Pierre, 14000 Caen (FR); Vivier, Yves, 14480 Rucqueville (FR)
(74) Mandataire: Texier, Christian

(57) **Abrégé**

La présente invention concerne un commutateur électrique pour l'alimentation des indicateurs de changement de direction d'un véhicule automobile comprenant un boîtier (100), un ensemble support (200) monté à pivotement, un élément de rappel (500), des moyens (250) formant butée solidaires de l'ensemble support (200) pour interdire le déplacement de l'élément de rappel (500) dans une position de travail tant que l'ensemble support (200) est en position de repos et une épingle élastique (600) en forme générale d'un "W" dont la forme centrale en "U" est fixée sur l'ensemble support (200), les tronçons latéraux (620, 630) de l'épingle (600) reposant par leurs extrémités (622, 632) sur des structures d'appui (230, 232) formées sur l'ensemble support (200), et des zones d'appui (614, 616) de l'épingle (600) comprenant avec l'élément de rappel étant formées sur les branches de ladite forme centrale en U (610), pour contrôler la remise à zéro du commutateur.

## Description

La présente invention concerne le domaine des commutateurs électriques conçus pour l'alimentation des indicateurs de changement de direction d'un véhicule automobile.

On sait que les dispositifs de commutation assurant l'alimentation des indicateurs de changement de direction d'un véhicule automobile doivent généralement permettre l'alimentation respectivement des indicateurs situés sur la gauche ou sur la droite du véhicule, selon le sens de rotation d'une manette de commande, et permettre soit une remise à zéro manuelle par actionnement de la manette de commande, soit une remise à zéro automatique lorsque le volant du véhicule est entraîné dans un sens opposé à celui de la manoeuvre de changement de direction ainsi signalée, tout en autorisant sans détérioration d'une part une situation dite de forçage au cours de laquelle le conducteur peut délibérément maintenir la manette de commande dans une position active d'alimentation des indicateurs au cours d'une rotation du volant dans le sens opposé à la manoeuvre ainsi signalée, et d'autre part une rotation du volant supérieure à 360° dans le sens correspondant à celui de la manoeuvre signalée, sans provoquer de retour à zéro automatique de la structure de commutation.

On sait également que les dispositifs de commutation assurant l'alimentation des indicateurs de changement de direction doivent généralement permettre en outre une position de commande stable (c'est à dire avec maintien de l'alimentation des indicateurs sélectionnés, après relâchement de la manette de commande par l'utilisateur, et interruption de cette alimentation lorsque l'utilisateur ramène manuellement cette manette dans sa position de repos ou comme indiqué précédemment lorsque le volant du véhicule est entraîné dans un sens opposé à celui de la manoeuvre de changement de direction ainsi signalée) ou une position de commande instable (c'est à dire avec interruption de l'alimentation des indicateurs sélectionnés, dès que la manette de commande est relâchée par l'utilisateur).

De nombreux commutateurs électriques pour l'alimentation des indicateurs de changement de direction d'un véhicule automobile ont déjà été proposés.

On pourra par exemple se référer aux documents FR-A-2 515 865, FR-A-2 607 961, US-A-4 393 280, FR-A-2 076 682, US 4 315 117, DE-A-3 430 664, FR-A-2 758 650, FR-A-2 748 153, US-A-4 739 131, US-A-4 880 945, FR-A-2 199 708, FR-A-2 246 171, FR-A-2 326 310, DE-A-2 201 157, DE-A-2 515 754, DE-A-2 528 681, DE-A-1 037 886, FR-A-2 297 750, FR-A-2 191 235, US-A-4 335 284, DE-A-3 502 651, DE-A-3 510 714, FR-A-2 280 529, DE-A-2 629 551, FR-A-2 312 392 et FR-A-2 148 422.

On comprendra à la lecture des documents précités que les structures ainsi proposées jusqu'ici pour répondre au cahier des charges posé pour les indicateurs de changement de direction, sont particulièrement complexes. Il en est notamment ainsi pour les moyens connus destinés à assurer la remise à zéro automatique des commutateurs.

La présente invention a maintenant pour but de proposer de nouveaux moyens adaptés pour assurer la commande d'indicateurs de changement de direction, qui soient de structure simple, fiable et économique.

Ce but est atteint dans le cadre de la présente invention grâce à un commutateur électrique comprenant :
. un boîtier,
. un ensemble support monté à pivotement sur le boîtier entre une position de repos et au moins deux positions de travail correspondant respectivement à la mise en service de l'un des indicateurs de changement de direction, droite ou gauche,
. des moyens d'indexation de l'ensemble support dans son pivotement par rapport au boîtier,
. des moyens associés à l'ensemble support pour assurer l'alimentation des indicateurs de changement de direction lorsque l'ensemble support est déplacé vers une position de travail,
. un élément de rappel monté à translation sur le boîtier entre une position rétractée dans laquelle ledit élément de rappel est éloigné d'une came de commande liée au volant du véhicule et une position de travail dans laquelle ledit élément de rappel interfère avec le trajet de déplacement de cette came de commande, le dit élément de rappel étant également susceptible de rotation par rapport au boîtier,
. des moyens formant butée solidaires de l'ensemble support pour interdire le déplacement de l'élément de rappel dans la position de travail tant que l'ensemble support est en position de repos et
. une épingle élastique portée par l'ensemble support et conformée pour présenter une zone d'appui en regard d'un organe de sollicitation de l'élément de rappel, lorsque ce dernier et l'ensemble support sont déplacés en position de travail, de sorte que lorsque le volant du véhicule est alors déplacé dans un premier sens correspondant à la manoeuvre ainsi signalée, la sollicitation de l'élément de rappel par la came de commande provoque un pivotement de l'élément de rappel par rapport au boîtier sans effet sur l'épingle et sur l'ensemble support, tandis que lorsque le volant est déplacé dans un second sens opposé à la manoeuvre signalée, la sollicitation de l'élément de rappel par la came de commande provoque un contact entre l'organe de sollicitation de l'élément de rappel et la zone d'appui de l'épingle et génère un couple de rappel sur l'ensemble support propre à ramener ce dernier en position de repos,
caractérisé par le fait que l'épingle élastique a la forme générale d'un « W » dont la forme centrale en « U » est fixée sur l'ensemble support et a sa concavité dirigée vers la came de commande, les tronçons latéraux de l'épingle reposant par leurs extrémités sur des structures d'appui formées sur l'ensemble support, et lesdites zones d'appui de l'épingle étant formées sur les branches de ladite forme centrale en « U ».

Cette définition est délimitée sous forme d'un préambule et d'une partie caractérisante, par rapport au document FR-A-2 148 422.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue schématique en perspective éclatée d'un dispositif de commutation conforme à la présente invention,
- la figure 2 représente une vue en perspective, en position assemblée et au repos, du même dispositif de commutation,
- la figure 3 représente une vue en coupe selon un plan de coupe perpendiculaire à l'axe de rotation de l'ensemble support, en position de travail indexée à gauche,
- la figure 4 représente une vue similaire selon un second plan de coupe perpendiculaire à celui de la figure 3, c'est-à-dire selon un plan de coupe perpendiculaire à l'axe de rotation de l'ensemble support, également en position de repos, et
- la figure 5 représente une vue selon un plan de coupe similaire à celui de la figure 4, en position de travail indexée à droite.

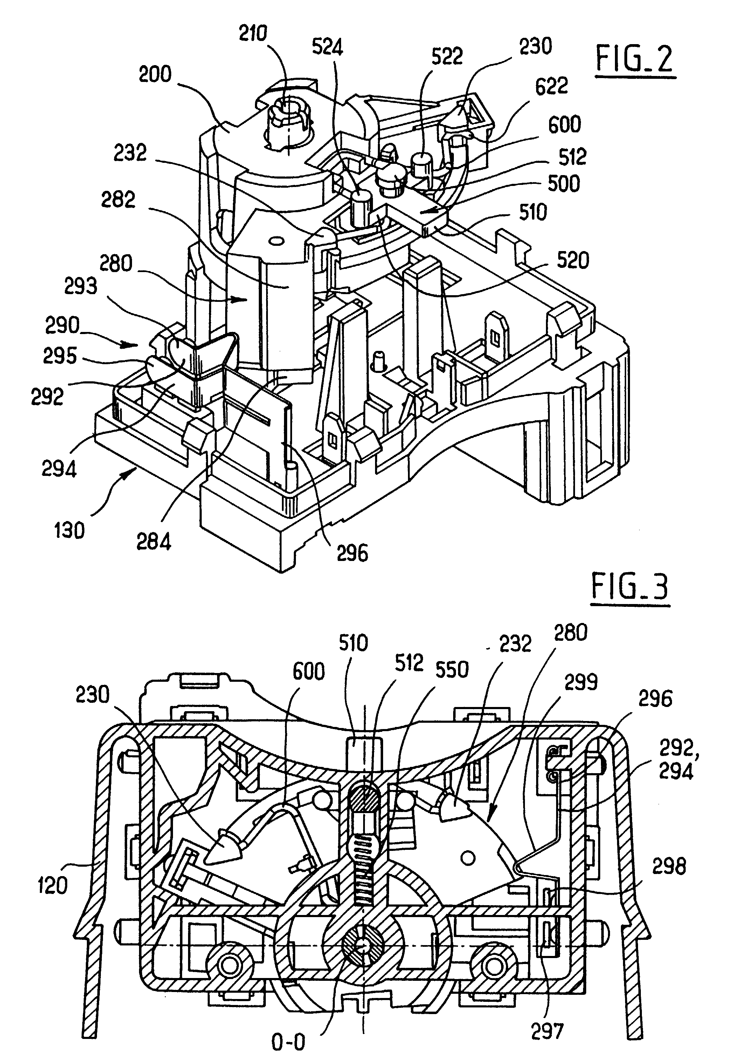

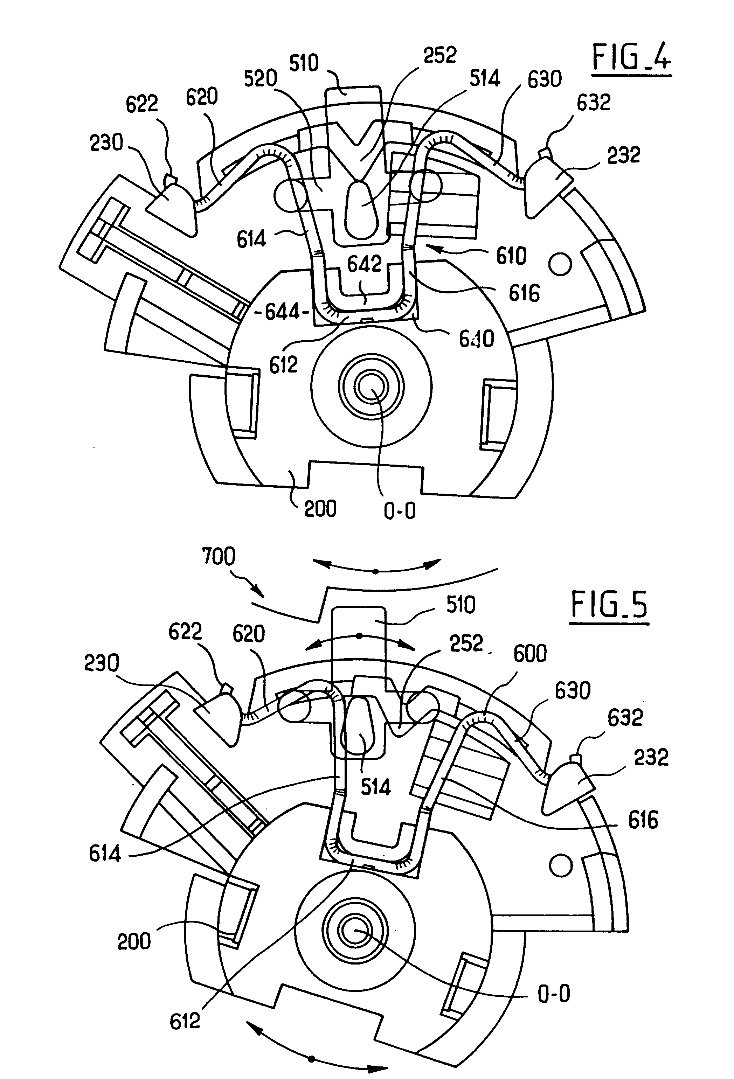

Comme on l'a indiqué précédemment, le commutateur électrique conforme à la présente invention comprend :
- un boîtier 100,
- un ensemble support 200 monté à pivotement sur le boîtier 100, autour d'un axe O-O entre une position de repos telle qu'illustrée sur les figures 2 et 4 et au moins deux positions de travail correspondant respectivement à la mise en service de l'un des indicateurs de changement de direction, droite ou gauche, ces positions de travail étant illustrées sur les figures 3 et 5,
- des moyens d'indexation 300 de l'ensemble support 200 dans son pivotement par rapport au boîtier 100 entre la position de repos et les positions de travail,
- des moyens 280, 290 associés à l'ensemble support 200 pour assurer l'alimentation des indicateurs de changement de direction lorsque l'ensemble support est déplacé vers une position de travail,
- un élément de rappel 500 monté à translation sur le boîtier 100 entre une position rétractée (correspondant aux figures 2 et 4) dans laquelle ledit élément rappel 500 est éloigné d'une came de commande 700 liée au volant du véhicule et une position de travail (visible sur les figures 3 et 5) dans laquelle ledit élément de rappel 500 interfère avec le trajet de déplacement de cette came de commande 700, ledit élément de rappel 500 étant également susceptible de rotation par rapport au boîtier 100,
- des moyens 250 formant butée, solidaires de l'ensemble support 200 pour interdire le déplacement de l'élément de rappel 500 dans la position de travail tant que l'ensemble support 200 est en position de repos, et
- une épingle élastique 600 portée par l'ensemble support et conformée pour présenter une zone d'appui 614 ou 616 au regard d'un organe de sollicitation 514 de l'élément..de rappel 500, lorsque ce dernier et l'ensemble support 200 sont déplacés en position de travail, de sorte que lorsque le volant du véhicule est alors déplacé dans un premier sens correspondant à la manoeuvre ainsi signalée, la sollicitation de l'élément de rappel 500 par la came de commande 700 provoque un pivotement de l'élément de rappel 500 par rapport au boîtier 100 sans effet sur l'épingle 600 et sur l'ensemble support 200, tandis que lorsque le volant est déplacé dans un second sens opposé à la manoeuvre signalée, la sollicitation de l'élément de rappel 500 par la came de commande 700 provoque un contact entre l'organe de sollicitation 514 de l'élément de rappel 500 et la zone d'appui 614 ou 616 de l'épingle 600 et génère un couple de rappel sur l'ensemble support 200 propre à ramener ce dernier en position de repos.

De préférence, dans le cadre de l'invention, au moins le boîtier 100, l'ensemble support 200 et l'élément de rappel 500 sont réalisés par moulage en matière plastique.

En revanche, de préférence, dans le cadré de l'invention, l'épingle 600 est réalisée en métal.

Le boîtier 100 peut faire l'objet de nombreuses variantes de réalisation et ne sera pas décrit dans le détail par la suite.

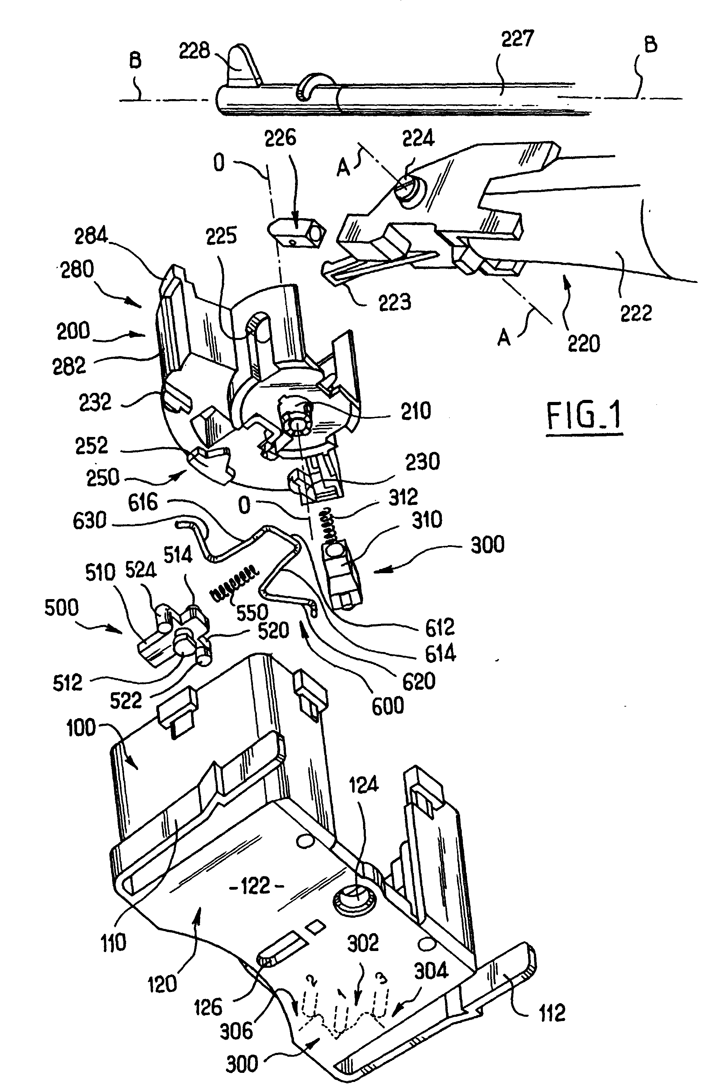

Avantageusement, le boîtier 100 comporte des moyens de fixation sur un haut de colonne de direction de véhicule automobile, par exemple à l'aide de languettes élastiques, telles que référencées 110, 112 sur la figure 1.

Le boîtier 100 est formé de préférence par la combinaison d'une coquille principale 120 illustrée sur la figure 1 et d'un couvercle complémentaire 130 illustré sur la figure 2.

L'élément de boîtier 120 possède une paroi 122, globalement perpendiculaire à l'axe de rotation O-O de l'ensemble support 200.

Cette paroi 122 possède un orifice 124 destiné à recevoir un tourillon d'articulation, cylindrique et complémentaire, solidaire de l'ensemble support 200, coaxial à l'axe de rotation O-O précité.

La paroi 122 possède en outre une lumière 126 d'orientation radiale par rapport à l'axe de l'orifice 124 et située entre cet orifice 124 et l'arbre de direction. Plus précisément, le plan médian de cette lumière 126 est confondu avec le plan contenant l'axe de l'orifice 124 et l'axe de l'arbre de direction.

La lumière 126 possède une largeur constante. Elle est destinée à guider l'élément de rappel 500, d'une part à translation, d'autre part à rotation.

L'élément de boîtier 120 possède en outre une deuxième paroi généralement perpendiculaire à la paroi 120 précitée et qui définit un ensemble de rampes d'indexage 300 comme indiqué précédemment.

Plus précisément encore, de préférence, comme on l'a schématisé sur la figure 1, cette rampe d'indexage 300 comprend trois dièdres 302, 304 et 306 concaves en direction de l'axe de rotation O-O. Ces dièdres d'indexage 302, 304, 306 sont de préférence définis par une génératrice parallèle à l'axe de rotation O-O.

L'ensemble support 200 est formé d'un bloc comprenant au moins le tourillon 210 précité complémentaire de l'orifice 124. De préférence, l'ensemble support 200 possède un second tourillon coaxial au premier, sur sa face opposée, adapté pour coopérer avec un orifice complémentaire et coaxial à l'axe O-O formé dans le couvercle 130.

L'ensemble support 200 peut être entraîné à rotation autour de l'axe O-O par tout moyen classique approprié.

Il peut s'agir par exemple d'une manette ou tige liée rigidement à l'ensemble support 200 (c'est-à-dire sans possibilité de déplacement relatif entre cette manette de commande et l'ensemble support 200).

Cependant, de préférence, la manette de commande référencée généralement 220 sur la figure 1 annexée possède au moins un degré de liberté par rapport à l'ensemble support 200. Ainsi, le corps de manette 222 illustré sur la figure 1 est articulé sur l'ensemble support 200 autour d'un axe A-A globalement perpendiculaire à l'axe O-O de rotation de l'ensemble support 200 et matérialisé par des tourillons 224 solidaires du corps de manette 222 et en prise avec des logements complémentaires 225 formés sur l'ensemble support 200. Le corps de manette 222 est par ailleurs indexé dans son déplacement autour de l'axe A-A par rapport à l'ensemble support 200 par tout moyen approprié, par exemple à l'aide d'un point 226 engagé dans une chambre borgne formée dans le corps de manette 222 et sollicitée élastiquement contre une rampe d'indexage complémentaire solidaire de l'ensemble support 200.

Selon le mode de réalisation préférentiel illustré sur la figure 1, la manette 220 comporte en outre une tige 227 engagée dans un canal interne du corps de manette 222 et ainsi guidée à rotation autour de son axe longitudinal B-B globalement orthogonal aux axes O-O et A-A précités.

De préférence, le corps de manette 222 et la tige 227 sont adaptés pour commander différentes fonctions électriques auxiliaires lors de leur déplacement autour de leurs axes respectifs A-A et B-B, à l'aide d'organes 223 et 228 respectivement excentrés par rapport à leurs axes de rotation. Ainsi, et non limitativement, la rotation de la tige 227 autour de son axe B-B peut être utilisée pour assurer une sélection/mise en service des fonctions éclairages, tandis que le pivotement du corps de manette 222 autour de son axe A-A par rapport à l'ensemble support 200 assure une fonction appel phare ou une commutation inversion code/phare.

Les moyens d'indexation associés à l'ensemble support 200 pour coopérer avec la rampe d'indexage 300 peuvent faire l'objet de nombreuses variantes de réalisation.

Il peut s'agir, comme illustré sur les figures annexées, d'un plot 310 logé dans une chambre borgne de l'ensemble support 200 selon une orientation généralement radiale par rapport à l'axe de rotation O-O.

Ce plot 310 est sollicité vers l'extérieur de la chambre borgne précitée et en direction de la rampe d'indexage 302, 304, 306 par un ressort 312.

En position de repos, le plot d'indexage 310 repose dans le dièdre central 302. Il définit ainsi une position stable à l'ensemble support 200 par rapport au boîtier 100.

Par rotation de l'ensemble support 200 autour de son axe O-O, le plot d'indexage 310 peut cependant être déplacé contre l'un ou l'autre des deux dièdres concaves d'indexage 304, 306 latéraux. Là encore, on obtient alors une position stable pour l'ensemble support 200 par rapport au boîtier 100.

Cependant, on notera que l'ensemble support 200 peut être déplacé dans une position seulement instable, à partir de sa position de repos, si l'amplitude de pivotement de l'ensemble support 200 autour de son axe O-O est insuffisante pour que le plot d'indexage 310 atteigne les dièdres latéraux 304 et 306. Dans ce cas, le plot d'indexage 310 est déplacé seulement sur les flancs du dièdre central 302.

Comme on l'a indiqué précédemment, et de façon classique en soi, il est prévu des moyens associés à l'ensemble support 200 pour assurer l'alimentation des indicateurs de changement de direction lorsque l'ensemble support 200 est déplacé vers une position de travail.

Ces moyens d'alimentation peuvent faire l'objet de nombreuses variantes de réalisation.

Selon le mode de réalisation préférentiel illustré sur les figures annexées, il est ainsi prévu, d'une part un ensemble de cames 280 sur la périphérie de l'ensemble support 200 et, d'autre part un ensemble de lames élastiques électriquement conductrices 290, en regard, solidaires du boîtier 100, c'est-à-dire de la coquille 120 ou du couvercle 130 comme illustré sur la figure 2.

Plus précisément encore, selon le mode de réalisation illustré sur la figure 2, il est prévu ainsi deux lames 292, 294 globalement parallèles et d'orientation tangentielle par rapport à la périphérie de l'ensemble support 200. Ces deux lames élastiques 292 et 294 ont une base commune 296 reliée à une borne d'alimentation. Les extrémités libres 293 et 295 de ces lames 292, 294 sont placées en regard de plots respectifs 297, 298 associés respectivement à l'alimentation des indicateurs de changement de direction droit ou gauche.

Chacune des lames 292, 294 possède en outre un bossage ou incurvation 299 dirigé vers l'ensemble de cames 280 précité.

La géométrie de cet ensemble de cames 280 est adaptée pour modifier l'état de sollicitation de l'une respective des lames 292, 294, selon le sens de rotation, lorsque l'ensemble support 200 est écarté de sa position de repos pour modifier alors l'état de liaison électrique entre l'une des lames 292 ou 294 et les plots respectifs en regard 298 et 297.

A cet effet, de préférence, l'ensemble de cames 280 solidaire de l'ensemble support 200 comprend deux étages de cames de commande 282, 284 positionnées respectivement en regard des lames de contact 292 et 294.

En l'espèce, selon le mode de réalisation illustré sur les figures annexées, cet élément de rappel 500 est formé essentiellement de deux barreaux 510, 520 respectivement principal et secondaire, disposés en croix à 90°.

Le barreau principal 510, au repos, s'étend radialement par rapport à l'axe O-O en regard de la lumière 126.

Ce barreau principal 510 porte un tourillon 512 de diamètre complémentaire de la largeur de la lumière 126.

Ainsi l'homme de l'art comprendra que l'élément de rappel 500 peut, d'une part être déplacé à translation par rapport au boîtier 100 dans la direction d'élongation de la lumière 126, c'est-à-dire radialement en éloignement et en rapprochement par rapport à l'axe de rotation O-O et, d'autre part l'élément de rappel 500 peut pivoter par rapport au boîtier 100 autour de l'axe de ce tourillon 512.

Sur sa face opposée le barreau principal 510 porte un doigt 514 qui tient lieu d'organe de sollicitation.

Par ailleurs, on aperçoit sur les figures annexées deux ergots 522, 524 portés sur les extrémités du barreau secondaire 520, sur la même face que le tourillon 512.

Ces deux ergots 522, 524 peuvent vernir reposer contre une paroi du boîtier 100 lorsque l'élément de commande 500 est déplacé en position de travail.

Le ressort 550 sollicite l'élément de rappel 500 en éloignement de l'axe O-O. Le ressort 550 peut ainsi être intercalé entre un point d'appui solidaire de l'ensemble support 200 et l'élément de rappel 500, par exemple le tourillon 512.

Comme on l'a indiqué précédemment, le dispositif de commutation conforme à la présente invention comprend en outre des moyens formant butée 250 sur l'ensemble support 200 pour interdire le déplacement de l'élément de rappel 500 dans une position de travail tant que l'ensemble support 200 est en position de repos.

De préférence, comme illustré sur les figures annexées, ces moyens formant butée 250 sont constitués d'un dièdre 252 solidaire de l'ensemble support 200 et convexe en direction de l'axe O-O. Plus précisément encore, le dièdre 252 est centré sur le plan médian de la lumière 126, en position de repos du dispositif. Ainsi le sommet du dièdre 252 sert d'appui au doigt 514 en position de repos.

Enfin, comme indiqué précédemment, le dispositif de commutation conforme à la présente invention comprend une épingle élastique 600.

Celle-ci a la forme générale d'un W dont la forme centrale en U 610 est constituée d'une âme 612 et de deux ailes latérales 614, 616.

Ces ailes 614, 616 peuvent être rectilignes. Cependant, selon le mode de réalisation illustré sur les figures annexées, chacune des ailes 614, 616 est légèrement incurvée vers l'extérieur en éloignement de l'âme 212 de sorte que ladite forme centrale en U de l'épingle élastique 600 est légèrement divergente.

Plus précisément encore, selon le mode de réalisation illustré sur les figures annexées, cette forme divergente est obtenue grâce à des ailes latérales 614, 616 formées chacune de deux tronçons rectilignes et non alignés.

Cette forme centrale en U 610 de l'épingle élastique a sa concavité dirigée vers la came de commande 700 soit en éloignement de l'axe de rotation O-O de l'ensemble support 200.

L'épingle élastique 600 est fixée sur l'ensemble support 200 au niveau de cette forme centrale en U 610. Pour cela, l'âme 612 et la base des ailes latérales 614, 616 est engagée à force dans une chambre complémentaire en U 640 formée entre deux éléments 642, 644. L'épingle élastique 600 possède par ailleurs deux tronçons latéraux 620, 630 prolongeant respectivement les ailes latérales 614, 616 précitées. Chacun de ces tronçons latéraux 620, 630 forme un dièdre concave tourné généralement vers l'axe de rotation O-O avec l'une des ailes latérales centrales 614, 616 précitées.

Et , ces tronçons latéraux 620, 630 de l'épingle 600 reposent par leur extrémité sur des structures d'appui respectives 230, 232 solidaires de l'élément support 200.

Plus précisément encore, de préférence, les extrémités libres des tronçons latéraux 620, 630 de l'épingle élastique 600, sont de préférence incurvés, concaves en éloignement de l'axe de rotation O-O.

Sur la figure 1, on a ainsi schématisé chacun des tronçons latéraux 620, 630 sous forme de deux segments globalement rectilignes et inclinés entre eux. Selon le mode de réalisation illustré sur les figures 4 et 5, on a par contre illustré les tronçons latéraux 620, 630 avec des extrémités 622, 632 respectives en forme de boucles ouvertes.

Les "zones d'appui" précitées de l'épingle élastique 600 destinées à être placées en regard de l'organe de sollicitation 514 de l'élément de rappel 500 lorsque ce dernier est déplacé en position de travail, sont formées sur les branches latérales de ladite forme centrale en U 610.

Le fonctionnement général du dispositif de commutation conforme à la présente invention est le suivant.

En position de repos, le doigt de rappel 510 repose par l'intermédiaire du doigt 514 sur le sommet de la butée en dièdre convexe 252 solidaire de l'élément support 200. Ainsi, l'élément de rappel 500 est maintenu éloigné du trajet de déplacement de la came de commande 700 lié à l'arbre de direction. L'état de liaison défini entre les lames conductrices 292, 294 et les plots coopérant 297, 298 interdit toute alimentation électrique des indicateurs de changement de direction.

Lorsque l'ensemble support 200 est déplacé à rotation à partir de cette position de repos, autour de l'axe O-O, sur une amplitude limitée de sorte que le plot d'indexage 300 ne puisse atteindre les dièdres latéraux 304, 306, l'une des lames 292, 294 est sollicitée par la came 282,284 complémentaire pour modifier l'état de liaison avec le plot 297 ou 298 et assurer ainsi l'alimentation temporaire des indicateurs de changement de direction correspondant. Cependant, cette position est une position instable du fait que la sollicitation exercée par le plot d'indexage 300 ramène l'ensemble support 200 et l'ensemble de commutation en position de repos dès que l'effort appliqué sur l'ensemble support 200 est relâché par l'utilisateur.

Pour atteindre une position de commande stable de l'un ou l'autre des indicateurs de changement de direction, il convient par conséquent de déplacer l'ensemble support 200 autour de l'axe O-O sur une amplitude supérieure pour permettre au plot d'indexage 300 d'atteindre l'un des dièdres 304 ou 306.

On notera que lorsque l'ensemble support 200 est ainsi déplacé de sa position de repos vers une position de travail, le dièdre butée 252 est décalé latéralement par rapport au doigt 514 de sorte que l'élément de rappel 500 est déplacé radialement vers l'extérieur par rapport à l'axe O-O par le ressort 550. Ainsi, l'extrémité radialement externe de l'élément de rappel 500 interfère avec le trajet en déplacement de la came de commande 700.

Une fois l'ensemble support 200 ainsi déplacé en position de travail, l'épingle élastique 600 liée à l'ensemble support 200 présente une zone d'appui 614 ou 616 en regard de l'organe de sollicitation 514 de l'élément de rappel 500 comme on le voit sur les figures 3 et 5.

Le retour en position de repos à partir de cette position de travail stable peut être obtenu soit manuellement soit automatiquement.

Le retour manuel en position de repos est obtenu lorsque l'utilisateur force l'ensemble support 200 vers sa position de repos. Au cours de cette opération, le ressort 312 est comprimé et le plot d'indexage 310 ramené automatiquement vers le dièdre central 302. Le retour automatique en position de repos du dispositif de commutation est obtenu lorsque le volant est déplacé dans un sens opposé à la manoeuvre ainsi signalée. Dans ce cas, en effet, la came de commande 700 (déplacée dans le sens contraire des aiguilles d'une montre selon la représentation arbitraire de la figure 5) vient solliciter l'extrémité de l'élément de commande 510. La came de commande 700 applique alors sur l'élément de commande 500 un couple de rotation autour de l'axe du tourillon 512 de sorte que l'organe de sollicitation 514 de l'élément de rappel 500 vient en contact avec une zone d'appui 614 ou 616 de l'épingle élastique 600 et applique sur celle-ci un couple propre à ramener là encore l'ensemble support 200 en position de repos par compression du ressort 312.

En position dite de forçage, c'est-à-dire lorsque l'ensemble support 200 est maintenu dans une position de travail par sollicitation de la manette 220, alors que le volant du véhicule est déplacé dans un sens opposé à la manoeuvre signalée, et que par conséquent la came de commande 700 vient solliciter l'élément de rappel 500 comme indiqué précédemment, la sollicitation de l'épingle élastique 600 par le doigt de sollicitation 514, comme décrit précédemment entraîne une déformation de l'épingle élastique 600, notamment par ouverture de sa forme centrale en U 610 accompagnée d'un glissement du tronçon latéral 620 ou 630 adjacent à l'aile latérale 614, 616 sollicitée par le doigt 514, sur la structure d'appui 230, 232 complémentaire de l'ensemble support 200.

On comprend ainsi que la sollicitation de l'élément de rappel 500 par la came de commande 700 est alors sans effet et l'ensemble de commutation reste en position de travail.

Par ailleurs, lorsque l'arbre de direction est sollicité dans le sens correspondant à la manoeuvre signalée, les contacts établis entre la came de commande 700 et l'élément de rappel 500 sont sans effet puisqu'ils entraînent un pivotement de l'élément de rappel 500 autour de l'axe du tourillon 512 tendant à éloigner l'organe de sollicitation 514 de la zone d'appui 514, 516 en regard de l'épingle élastique 600.

En conclusion, l'épingle élastique 600 conforme à la présente invention, permet soit un retour automatique en position de repos sous la sollicitation de la came de commande 700 et de l'élément de rappel 500, soit une position de forçage si l'utilisateur veut maintenir l'alimentation des indicateurs de changement de direction, et ce avec liberté de rotation du volant sur un angle quelconque dans le sens correspondant à la manoeuvre signalée.

Bien entendu la présente invention n'est pas limitée au mode de réalisation particulier qui vient d'être décrit, mais s'étend à toutes variantes conformes à son esprit.

## Revendications

1. Commutateur électrique pour l'alimentation des indicateurs de changement de direction d'un véhicule automobile comprenant :
- un boîtier (100),
- un ensemble support (200) monté à pivotement sur le boîtier (100) entre une position de repos et au moins deux positions de travail correspondant respectivement à la mise en service de l'un des indicateurs de changement de direction, droite ou gauche,
- des moyens d'indexation (300) de l'ensemble support (200) dans son pivotement par rapport au boîtier (100),
- des moyens (200, 290) associés à l'ensemble support (200) pour assurer l'alimentation des indicateurs de changement de direction lorsque l'ensemble support (200) est déplacé vers une position de travail,
- un élément de rappel (500) monté à translation sur le boîtier (100) entre une position rétractée dans laquelle ledit élément de rappel (500) est éloigné d'une came de commande (700) liée au volant du véhicule et une position de travail dans laquelle ledit élément de rappel (500) interfère avec le trajet de déplacement de cette came de commande (700), ledit élément de rappel (500) étant également susceptible de rotation par rapport au boîtier (100),
- des moyens (250) formant butée solidaires de l'ensemble support (200) pour interdire le déplacement de l'élément de rappel (500) dans la position de travail tant que l'ensemble support (200) est en position de repos et
- une épingle élastique (600) portée par l'ensemble support et conformée pour présenter une zone d'appui (614, 616) en regard d'un organe de sollicitation (514) de l'élément de rappel (500), lorsque ce dernier et l'ensemble support (200) sont déplacés en position de travail, de sorte que lorsque le volant du véhicule est alors déplacé dans un premier sens correspondant à la manoeuvre ainsi signalée, la sollicitation de l'élément de rappel (500) par la came de commande (700) provoque un pivotement de l'élément de rappel (500) par rapport au boîtier (100) sans effet sur l'épingle (600) et sur l'ensemble support (200), tandis que lorsque le volant est déplacé dans un second sens opposé à la manoeuvre signalée, la sollicitation de l'élément de rappel (500) par la came de commande (700) provoque un contact entre l'organe de sollicitation (514) de l'élément de rappel (500) et la zone d'appui (514, 516) de l'épingle (600) et génère un couple de rappel sur l'ensemble support (200) propre à ramener ce dernier en position de repos,
caractérisé par le fait que l'épingle élastique (600) a la forme générale d'un "W" dont la forme centrale en "U" est fixée sur l'ensemble support (200) et a sa concavité dirigée vers la came de commande (700), les tronçons latéraux (620, 630) de l'épingle (600) reposant par leurs extrémités (622, 632) sur des structures d'appui (230, 232) formées sur l'ensemble support (200), et lesdites zones d'appui (614, 616) de l'épingle (600) étant formées sur les branches de ladite forme centrale en U (610).

2. Dispositif selon la revendication 1, caractérisé par le fait que l'élément de rappel (500) comprend au moins un barreau (510) pourvu d'un tourillon (512) guidé à translation et à rotation dans une lumière (126) du boîtier (100) et comportant un doigt (514) formant organe de sollicitation.

3. Dispositif selon la revendication 2, caractérisé par le fait que l'élément de rappel (500) comporte en outre un barreau secondaire transversal (520) muni à ses extrémités de deux ergots (522, 524) susceptibles de servir d'appui sur le boîtier (100) lorsque l'élément de rappel (500) est déplacé en position de travail.

4. Dispositif selon l'une des revendications 1 à 3, caractérisé par le fait que l'élément de rappel (500) est sollicité en éloignement de l'axe de rotation de l'ensemble support (200) par un organe élastique (550).

5. Dispositif selon l'une des revendications 1 à 4, caractérisé par le fait que les moyens (250) formant butée solidaires de l'ensemble support (200) comprennent un dièdre (252) convexe en direction de l'axe de rotation O-O de l'ensemble support (200).

6. Dispositif selon l'une des revendications 1 à 5, caractérisé par le fait que l'épingle élastique (600) est réalisée en métal.

7. Dispositif selon l'une des revendications 1 à 6, caractérisé par le fait que les moyens d'indexation (300) comprennent un ensemble de rampes d'indexage sur le boîtier (100) constitué de trois dièdres concaves (302, 304, 306) et un plot (310) guidé sur l'ensemble support (200) et sollicité élastiquement vers l'ensemble de rampes d'indexage.

8. Dispositif selon l'une des revendications 1 à 7, caractérisé par le fait que les moyens associés à l'ensemble support (200) pour assurer l'alimentation des indicateurs de changement de direction comprennent, d'une part deux lames élastiques (292, 294) en matériau électriquement conducteur portées par le boîtier (100) et, d'autre part un ensemble de cames (280) sur la périphérie de l'ensemble support (200) adapté pour modifier, en fonction de la rotation de l'ensemble support (200) l'état de liaison entre ces lames (292, 294) et des plots (297, 298) respectivement associés.

9. Dispositif selon l'une des revendications 1 à 8, caractérisé par le fait que les extrémités (622, 632) de l'épingle élastique (600) reposant sur les structures d'appui (230, 232) de l'ensemble support (200) sont incurvées, concaves en éloignement de l'axe de rotation O-O de l'ensemble support (200).

10. Dispositif selon l'une des revendications 1 à 9, caractérisé par le fait qu'il comprend un corps de manette (222) articulé à rotation sur l'ensemble support (200) autour d'un axe A-A transversal à l'axe de rotation O-O de l'ensemble support (200) pour assurer une fonction électrique auxiliaire lors du pivotement du corps de manette (222).

11. Dispositif selon la revendication 10, caractérisé par le fait qu'il comprend en outre une tige (227) montée à rotation autour de son axe longitudinal B-B dans un canal interne du corps de manette (222) pour assurer une fonction auxiliaire lors de sa rotation.
